# EUROPÄISCHE PATENTSCHRIFT

(11) **EP 3 602 739 B1**
(45) Veröffentlichungstag und Bekanntmachung des Hinweises auf die Patenterteilung: **23.02.2022**
(21) Anmeldenummer: 18712500.0
(22) Anmeldetag: 28.02.2018
(51) Int. Cl.: H02K 1/27

(54) **E-MOTOR MIT UMSCHALTELEMENTEN IM MAGNETKREIS**
ELECTRIC MOTOR WITH SWITCHOVER ELEMENTS IN THE MAGNETIC CIRCUIT
MOTEUR ÉLECTRIQUE MUNI D'ÉLÉMENTS DE COMMUTATION DANS LE CIRCUIT MAGNÉTIQUE

(30) Priorität: 30.03.2017 DE 102017106828
(43) Veröffentlichungstag der Anmeldung: 05.02.2020
(73) Patentinhaber: Schaeffler Technologies AG & Co. KG, 91074 Herzogenaurach (DE)
(72) Erfinder: GRAMANN, Matthias, 77871 Renchen (DE); REIK, Wolfgang, 77815 Bühl (DE); ENGLER, Miriam, 73344 Gruibingen (DE); SCHWANEMANN, Peter, 77815 Bühl (DE); ANGRICK, Carsten, 77767 Appenweier (DE)
(86) Internationale Anmeldenummer: PCT/DE2018/100176
(87) Internationale Veröffentlichungsnummer: WO 2018/177457

(56) Entgegenhaltungen:
- DE-A1- 2 211 366
- DE-A1-102014 206 342
- DE-A1-102014 212 871
- JP-A- H07 288 940
- JP-A- 2002 112 474
- JP-A- 2004 222 350
- JP-A- 2007 244 063

## Beschreibung

Die Erfindung betrifft einen Rotor einer als Innenläufer ausgebildeten elektrischen Maschine sowie eine elektrische Maschine mit einem Rotor.

Aus dem Stand der Technik sind diverse Ausgestaltungen von Radial-, Transversalund Axialflussmaschinen bekannt.

So offenbart EP 2 985 893 A1 eine Axialfluss-Synchronmaschine zur aktiven Luftspaltverstellung zwischen Rotor und Stator.

Ferner offenbart US 2006/091752 A1 eine passive Verstellung des Luftspalts zwischen Rotor und Stator bei Außenläufer-Radialflusssynchronmaschinen.

Der vorgestellte Stand der Technik bezweckt - verallgemeinernd dargestellt - eine Verringerung von Verlusten und eine Erhöhung des Wirkungsgrads.

Ein Rotor gemäß dem Oberbegriff des Anspruchs 1 ist aus jeder der JP 2004 222350 A und der DE 10 2014 206 342 A1 bekannt.

Aufgabe der vorliegenden Erfindung ist es, einen Rotor, insbesondere einen Rotor einer als Innenläufer ausgebildeten elektrischen Maschine, sowie eine elektrische Maschine mit einem Rotor anzugeben, welcher bzw. welche Verluste im Betrieb verringert und dadurch der Wirkungsgrad der Maschine erhöht; ebenso ist es Aufgabe, induzierte Spannungen bei hohen Drehzahlen zu verringern und günstigerweise dadurch Überspannungen und darauf beruhende Schädigungen der zum Betrieb des Rotors bzw. der Maschine verwendeten Leistungselektronik zu verhindern.

Diese Aufgabe wird erfindungsgemäß durch die Merkmale des unabhängigen Anspruchs gelöst. Weitere vorteilhafte Weiterbildungen sind Gegenstand der Unteransprüche.

Gemäß einem ersten Aspekt umfasst ein Rotor einer als Innenläufer ausgebildeten elektrischen Maschine, eine Drehachse, welche sich in axialer Richtung erstreckt und um welche der Rotor drehbar ist.

Der Rotor weist eine äußere Mantelfläche, die den Rotor begrenzt, und mindestens eine Polanordnung auf.

Der Rotor umfasst ferner einen Stellmechanismus für die mindestens eine Polanordnung.

Der Stellmechanismus ist derart ausgebildet, dass der Abstand zwischen der äußeren Mantelfläche des Rotors und einem Flächenschwerpunkt der mindestens einen Polanordnung einstellbar ist. Dadurch ist die mindestens eine Polanordnung nach innen zur Drehachse des Rotors hin oder nach außen von der Drehachse des Rotors weg bewegbar. Mit anderen Worten ausgedrückt, ist es von Vorteil, wenn die mindestens eine Polanordnung mithilfe des Stellmechanismus in radialer Richtung bewegbar ist.

Günstigerweise ist der Flächenschwerpunkt der mindestens einen Polanordnung in einer Ebene angeordnet, die ausgehend von der Drehachse in radialer und tangentialer Richtung des Rotors aufgespannt wird.

Es ist günstig, wenn der Flächenschwerpunkt der mindestens einen Polanordnung von einem Flächenschwerpunkt einer Einheit gebildet wird, die günstigerweise sich aus einem magnetischem Rotorkörper und/oder einem magnetisierbaren Rotorkörper zusammensetzt.

Vorzugsweise umfasst der Stellmechanismus einen Aktuator zum Bewegen der mindestens einen Polanordnung.

Ferner ist es günstig, wenn der Stellmechanismus einen hydraulisch oder pneumatisch betreibbaren Aktuator, insbesondere einen Kolben, umfasst.

Auch ist es möglich, dass der Stellmechanismus einen elektrischen Aktuator, insbesondere einen elektrischen Motor, umfasst.

Günstigerweise ist der Aktuator als Linearantrieb oder als Drehantrieb ausgebildet.

Vorteilhafterweise umfasst der Stellmechanismus eine Stelleinrichtung, die vorzugsweise eine in axialer Richtung einwirkende mechanische Kraft in eine Kraft mit radialer Richtung umsetzt. Auf diese Weise kann z. B. die Kraft eines Ausrücklagers für den Stellmechanismus genutzt werden.

Des Weiteren ist es von Vorteil, wenn der Stellmechanismus mit der mindestens einen Polanordnung wirkverbunden ist, um die Polanordnung zu bewegen.

Vorzugsweise ist der Stellmechanismus zwischen der Drehachse und der mindestens einen Polanordnung angeordnet, die vorzugsweise von der Drehachse in radialer Richtung beabstandet ist.

Auch ist es günstig, wenn der Stellmechanismus zwischen der äußeren Mantelfläche und der mindestens einen Polanordnung angeordnet ist, die vorzugsweise von der äußeren Mantelfläche in radialer Richtung beabstandet ist.

Bevorzugterweise umfasst der Stellmechanismus ein elastisches Element, insbesondere eine Feder oder ein Gummielement, das einem Aktuator des Stellmechanismus entgegenwirkt. Dadurch kann die mindestens eine Polanordnung entgegen der Wirkrichtung des Aktuators rückgestellt werden.

Des Weiteren ist es bevorzugt, dass der Aktuator und das elastische Element an gegenüberliegenden Seiten der mindestens einen Polanordnung angeordnet sind. Somit können diese in entgegen gerichtete Richtungen wirken.

Erfindungsgemäß umfasst der Stellmechanismus einen Drehpunkt, um den die mindestens eine Polanordnung schwenkbar ist.

Vorzugsweise umfasst der Stellmechanismus eine Hebelanordnung, mit deren Hilfe die mindestens eine Polanordnung bewegbar bzw. schwenkbar ist.

Ferner ist es möglich, dass die Hebelanordnung einen oder zwei Hebelarme umfasst, wobei vorzugsweise ein erster Hebelarm den Drehpunkt mit einem Rotorkörper der mindestens einen Polanordnung verbindet.

Des Weiteren kann vorgesehen sein, dass ein zweiter Hebelarm den Drehpunkt mit einer beschleunigbaren Hebelmasse verbindet.

Vorzugsweise kann der erste und/oder zweite Hebelarm von einer Polanordnung bzw. deren Rotorkörper gebildet werden. Auch ist es günstig wenn der Hebelarm eine Länge aufweist, die von einem Schwerpunkt zu einem Drehpunkt verläuft. Bevorzugterweise sind die Länge der Hebelarme, die Masse des Rotorkörpers der mindestens einen Polanordnung und die beschleunigbare Hebelmasse derart aufeinander abgestimmt, dass bei Erreichen einer bestimmbaren Drehzahl des Rotors die Hebelmasse von der Drehachse nach außen weg oder zur Drehachse nach innen hin bewegt wird.

Günstigerweise wird dabei der Rotorkörper der mindestens einen Polanordnung über den Drehpunkt in die entgegengesetzte Richtung zur Hebelmasse bewegt.

Auch ist es von Vorteil, wenn der Stellmechanismus eine Kraftübertragungseinrichtung, insbesondere ein Ausrücklager, und eine Stelleinrichtung umfasst, die die mindestens eine Polanordnung bewegt.

Vorzugsweise ist die Stelleinrichtung über die von der Kraftübertragungseinrichtung einwirkende Kraft aktivierbar, wodurch die mindestens eine Polanordnung bewegbar ist.

Erfindungsgemäß weist der Rotor mindestens eine Arretierung für die mindestens eine Polanordnung auf, wobei die Arretierung wenigstens eine erste und eine zweite Stellposition umfasst.

Günstigerweise arretiert die erste und/oder zweite Stellposition die mindestens eine Polanordnung in einer ersten und/oder zweiten Entfernung bzw. in einem ersten und/oder zweiten Abstand von der Drehachse.

Günstigerweise unterscheiden sich die Beträge der ersten und zweiten Entfernung bzw. des ersten und zweiten Abstands voneinander.

In der vorliegenden Beschreibung wird unter dem Begriff der Entfernung der mindestens einen Polanordnung bzw. deren Rotorkörpern von der Drehachse, vorzugsweise der Abstand zwischen dem Schwerpunkt oder Flächenschwerpunkt und der Drehachse verstanden.

Des Weiteren kann vorgesehen sein, dass die mindestens eine Polanordnung einen magnetischen und/oder magnetisierbaren Pol umfasst.

Vorzugsweise umfasst die mindestens eine Polanordnung einen ersten Pol (z. B. Nordpol oder Südpol) und/oder einen zweiten Pol (z. B. Südpol oder Nordpol).

Des Weiteren ist es von Vorteil, wenn Polanordnungen mit unterschiedlichen magnetischen Polen in Umfangsrichtung des Rotors alternieren.

Auch ist es bevorzugt, wenn die mindestens eine Polanordnung mindestens einen magnetischen, insbesondere einen Permanentmagneten, und/oder einen magnetisierbaren Rotorkörper, insbesondere ein Blechpaket, umfasst.

Ferner ist es von Vorteil, wenn der mindestens eine magnetische und/oder magnetisierbare Rotorkörper, insbesondere im Querschnitt, quaderförmig, vorzugsweise stabförmig, ausgebildet ist.

Vorteilhafterweise ist ein Querschnitt eine Ebene, die von der radialen und tangentialen Richtung des Rotors gebildet wird.

Vorzugsweise umfasst die mindestens eine Polanordnung mindestens zwei magnetische und/oder magnetisierbare Rotorkörper, die eine V-förmige Anordnung oder eine Speichenanordnung bilden oder flach in den Rotor eingebettet sind.

Auch kann vorgesehen sein, dass der Rotor eine Aussparung pro Polanordnung zur Verfügung stellt, insbesondere eine Aussparung pro Rotorkörper, wobei vorzugsweise innerhalb der Aussparung mindestens ein magnetischer und/oder ein magnetisierbarer Rotorkörper angeordnet ist.

Ferner ist es bevorzugt, dass die Aussparung innerhalb des Rotors im Querschnitt als Kreissegment oder als Rechteck ausgebildet ist, um günstigerweise einer Polanordnung Raum zur Bewegung, insbesondere in radialer Richtung, zu geben.

Ein zweiter Aspekt der vorliegenden Erfindung umfasst eine elektrische Maschine, insbesondere eine Innenläufer-Radialflussmaschine, mit einem Rotor und einem Stator.

Es wird ausdrücklich darauf hingewiesen, dass die Merkmale des Rotors, insbesondere des Rotors einer als Innenläufer ausgebildeten elektrischen Maschine, wie sie unter dem ersten Aspekt erwähnt werden, einzeln oder miteinander kombinierbar bei der elektrischen Maschine Anwendung finden können.

Anders ausgedrückt, die oben unter dem ersten Aspekt der Erfindung genannten Merkmale betreffend den Rotor können auch hier unter dem zweiten Aspekt der Erfindung mit weiteren Merkmalen kombiniert werden.

Vorteilhafterweise umfasst eine elektrische Maschine einen Rotor, der Merkmale des ersten Aspekts der vorliegenden Erfindung umfasst, und einen Stator, der den Rotor umgibt.

Bevorzugterweise sind der Rotor und der Stator zueinander in radialer Richtung beabstandet, um einen Luftspalt zwischen beiden zu bilden.

Erfindungsgemäß umfasst die elektrische Maschine eine Drehachse, um welche der Rotor drehbar ist. Somit kann eine relative Bewegung der beiden zueinander gewährleistet werden.

Erfindungsgemäß weist der Rotor eine äußere Mantelfläche auf, die den Rotor begrenzt.

Erfindungsgemäß umfasst der Rotor mindestens eine Polanordnung und einen Stellmechanismus für die mindestens eine Polanordnung.

Günstigerweise umfasst der Stator eine innere Mantelfläche.

Erfindungsgemäß ist der Stellmechanismus derart ausgebildet, dass der Abstand zwischen einem Flächenschwerpunkt der mindestens einen Polanordnung und dem Stator, vorzugsweise dessen innerer Mantelfläche, einstellbar ist. Dadurch ist die mindestens eine Polanordnung nach innen zur Drehachse der elektrischen Maschine hin oder nach außen von der Drehachse der elektrischen Maschine weg bewegbar.

Ferner ist es bevorzugt, dass der Flächenschwerpunkt der mindestens einen Polanordnung in einer Ebene angeordnet ist, die ausgehend von der Drehachse in radialer und tangentialer Richtung des Rotors aufgespannt wird.

Des Weiteren ist es von Vorteil, wenn der Stator mindestens eine Statorpolanordnung zum Erzeugen eines magnetischen Feldes umfasst.

Hierbei umfasst die mindestens eine Statorpolanordnung einen Statorzahn mit Wicklungen. Vorzugsweise können die Wicklungen unterschiedlich bestromt werden, sodass in einem Statorzahn unterschiedliche magnetische Pole oder sogar kein magnetischer Pol erzeugbar sind.

Erfindungsgemäß weist der Rotor mindestens eine Arretierung für die mindestens eine Polanordnung auf.

Erfindungsgemäß umfasst die Arretierung wenigstens eine erste und eine zweite Stellposition.

Des Weiteren ist bevorzugt, dass die Stellpositionen die mindestens eine Polanordnung in unterschiedlichen Entfernungen von der Drehachse arretiert.

Auch kann vorgesehen sein, dass innerhalb eines bestimmbaren Zeitintervalls von der mindestens einen Statorpolanordnung ein elektro-magnetisches Gegenfeld zum elektro-magnetischen Feld der mindestens einen Polanordnung des Rotors generierbar ist. Dadurch ist es vorzugsweise möglich, nach Lösen der arretierten Polanordnung in der ersten Stellposition ein Verschieben der Polanordnung entsprechend der von den elektro-magnetischen Feldern erzeugten Kräften zu ermöglichen und an der zweiten Stellposition zu arretieren.

Nachfolgend wird der oben dargestellte Erfindungsgedanke ergänzend mit anderen bzw. weiteren Worten ausgedrückt.

Dieser Gedanke betrifft vorzugsweise vereinfacht dargestellt das Design eines Rotors für eine Synchronmaschine in Außen- oder Innenläufertechnologie günstigerweise bestehend aus einem drei oder mehrphasigen Drehstromstator und vorzugsweise einem permanentmagneterregten Rotor.

Der Einsatzbereich der Erfindung betrifft bevorzugterweise alle Anwendungsgebiete von drehenden elektrischen Maschinen. Besonders vorteilhaft ist die Erfindung für Anwendungen, in denen vorzugsweise die drehende elektrische Maschine über große Drehmoment- und Drehzahlbereiche betrieben wird beispielsweise aber nicht ausschließlich als Traktionsmaschine eines elektrisch betriebenen Automobils.

Hierbei stellt sich vorzugsweise die Aufgabe, eine elektrische Maschine insbesondere aber nicht ausschließlich auf einen weiten Drehzahl- und Drehmomentbereich weiter zu optimieren.

Diese Optimierung zielt vorteilhafterweise auf die Optimierung einer elektrischen Maschine, um somit in Bezug auf Wirkungsgrad und Kosten ein verbessertes Maschinenkonzept zu ermöglichen.

Während bevorzugterweise bei der erfinderischen Lösung der geometrische Luftspalt zwischen Rotor und Stator konstant bleibt, kann der effektive magnetische Luftspalt durch umklappbare Elemente bzw. durch einen Stellmechanismus für mindestens eine Polanordnung im Rotor angepasst werden.

Die umklappbaren Elemente im Rotor bzw. der Stellmechanismus für die Polanordnung weisen vorzugsweise entweder Blechpaketelemente bzw. einen magnetisierbaren Pol, Permanentmagnete bzw. einen magnetischen Pol oder einer Kombination aus beidem auf.

Vorzugsweise kann die Position der klappbaren Elemente im Betrieb verändert werden, sodass die elektrischen und magnetischen Eigenschaften der elektrischen Maschine im Betrieb an die jeweilige Betriebsstrategie angepasst werden kann.

Auf diese Weise können Verluste im Betrieb verringert und dadurch der Wirkungsgrad der Maschine erhöht werden. Ferner können induzierte Spannungen bei hohen Drehzahlen verringert werden. Dadurch können in der Konsequenz Überspannungen und darauf beruhende Schädigungen der zum Betrieb der Maschine verwendeten Leistungselektronik verhindert werden.

Nachstehend werden bevorzugte Merkmale der Erfindung stichpunktartig angegeben.

Vorzugsweise ist der Rotor bzw. weist die Rotortopologie flach, in V-Form oder Spoke-Anordnung eingebettete Permanentmagneten auf.

Günstigerweise wird der effektive Luftspalt durch Umklappen eines Blechelements, eines Magneten oder eines kombinierten Elements bzw. mindestens einer Polanordnung vergrößert.

Bevorzugterweise wirken Fliehkräfte auf die mindestens eine Polanordnung bzw. den Stellmechanismus bzw. auf das klappbare Element entweder direkt oder auf eine Hebelanordnung ein, die an das umzuklappende Element bzw. die mindestens eine Polanordnung befestigt ist.

Vorzugsweise wird der Stellmechanismus durch eine externe Aktorik (elektrisch, hydraulisch, durch Umlenkung der Kraft eines Ausrücklagers, etc.) aktiviert.

Bevorzugterweise wird der Stellmechanismus durch bewusste Einprägung eines Gegenfelds im Stator, um die Magnetkräfte im Rotor zu reduzieren, und das gleichzeitige Öffnen einer Arretierung aktiviert.

Nachstehend wird die Erfindung anhand eines Ausführungsbeispiels in Verbindung mit zugehörigen Zeichnungen näher erläutert. Diese zeigen schematisch:
- **Fig. 1**: eine Schnittansicht auf einen erfindungsgemäßen Rotor in einem ersten Zustand;
- **Fig. 2**: eine Schnittansicht auf einen erfindungsgemäßen Rotor in einem zweiten Zustand;
- **Fig. 3**: eine Schnittansicht auf einen erfindungsgemäßen Rotor mit einem Ausführungsbeispiel eines Stellmechanismus des Rotors;
- **Fig. 4**: eine Schnittansicht auf einen erfindungsgemäßen Rotor mit einem weiteren Ausführungsbeispiel eines Stellmechanismus des Rotors;
- **Fig. 5**: eine Schnittansicht auf eine erfindungsgemäße elektrische Maschine mit einem Rotor und einem Stator in einem ersten Zustand; und
- **Fig. 6**: eine Schnittansicht auf eine erfindungsgemäße elektrische Maschine mit einem Rotor und einem Stator in einem zweiten Zustand.

In der nachfolgenden Beschreibung werden gleiche Bezugszeichen für gleiche Gegenstände verwendet.

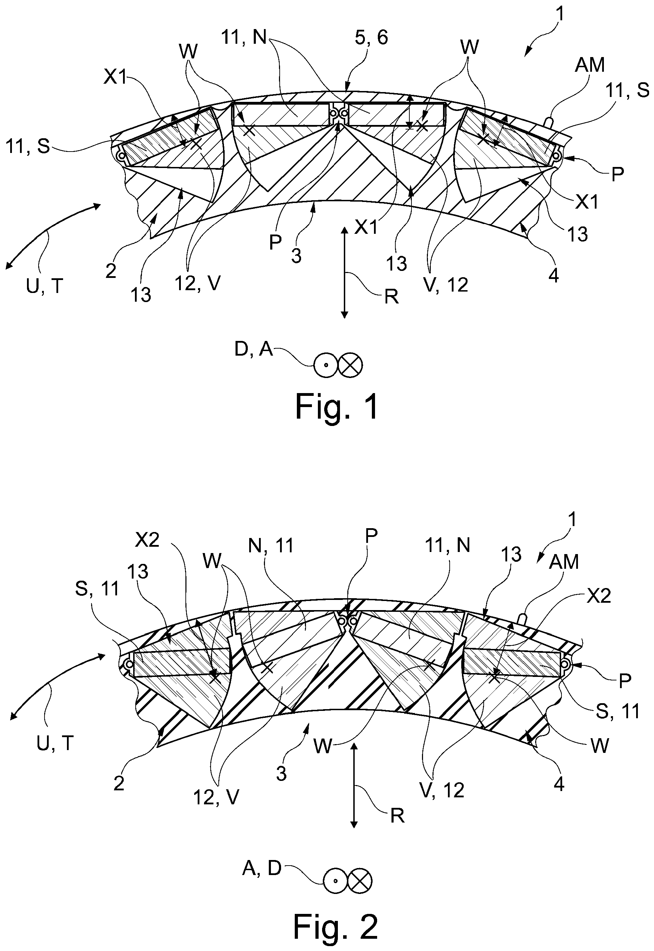

Figur 1 zeigt eine Schnittansicht auf einen erfindungsgemäßen Rotor 1 in einem ersten Zustand.

Genauer dargestellt zeigt Figur 1 einen Rotor 1 einer als Innenläufer ausgebildeten elektrischen Maschine 20. Dabei umfasst der Rotor 1 eine Drehachse D, welche sich in axiale Richtung A erstreckt und um welche der Rotor 1 drehbar ist.

Die Drehachse D sowie die axiale Richtung A stehen senkrecht auf der dargestellten Bildebene, sozusagen erstecken sich die Drehachse D und die axialer Richtung A aus der Zeichenebene heraus oder in die Zeichenebene hinein.

Des Weiteren umfasst der Rotor 1 eine äußere Mantelfläche AM, die den Rotor 1 begrenzt.

Ferner hat der Rotor 1 diverse Polanordnungen, von denen in dargestellten Ausschnitt von Figur 1 drei Polanordnungen 2, 3, 4 gezeigt sind.

Jede der Polanordnungen 2, 3, 4 umfasst einen magnetischen und einen magnetisierbaren Pol N, V oder S, V, wobei die Polanordnungen 2, 4 einen ersten Pol N (Nordpol), und die Polanordnung 3 einen zweiten Pol S (Südpol) aufweisen.

Dabei alternieren Polanordnungen mit unterschiedlichen magnetischen Polen bzw. die Polanordnung 2, 4 und die Polanordnung 3 in Umfangsrichtung U bzw. in tangentialer Richtung T des Rotors 1.

Konkreter dargestellt, hat jede Polanordnung 2, 3, 4 einen bzw. zwei magnetische und magnetisierbare Rotorkörper 11, 12. Dabei ist der Rotorkörper 11 als ein Permanentmagnet 11 mit entsprechendem Pol N, S und der Rotorkörper 12 als ein magnetisierbares Blechpaket 12 ausgestaltet.

Jeder magnetische Rotorkörper 11 ist im Querschnitt quaderförmig ausgebildet, wobei jeder magnetisierbare Rotorkörper 12 im Querschnitt als Kreissegment ausgebildet ist.

Nochmals genauer geschildert, umfassen die Polanordnungen 2, 4 und die Polanordnung 3 jeweils zwei magnetische und magnetisierbare Rotorkörper 11, 12. Dabei bildet jede Polanordnung mit zwei magnetischen und magnetisierbaren Rotorkörpern eine V-förmige bzw. auf dem kopfstehende V-förmige Anordnung.

Des Weiteren stellt der Rotor 1 eine Aussparung 13 pro Polanordnung 2, 3, 4 zur Verfügung bzw. eine Aussparung 13 pro Rotorkörper 11, 12.

Innerhalb der Aussparung 13 ist jeweils ein magnetischer und ein magnetisierbarer Rotorkörper 11, 12 angeordnet, wobei die Aussparung 13 innerhalb des Rotors 1 im Querschnitt als Kreissegment ausgebildet ist, um einer Polanordnung 2, 3, 4 Raum zur Bewegung in tangentialer T und radialer Richtung R zu geben.

Auch verfügt der Rotor 1 über einen Stellmechanismus 5 für jede Polanordnung 2, 3, 4 bzw. für deren Rotorkörper 11, 12.

Ferner ist ein Stellmechanismus 5 mit einer Polanordnung 2, 3, 4 wirkverbunden, um die Polanordnung zu bewegen. Dabei weist der bzw. jeder Stellmechanismus 5 einen Drehpunkt P auf, um den die entsprechende Polanordnung 2, 3, 4 schwenkbar ist.

Jeder Stellmechanismus 5 umfasst einen elektrischen Aktuator 6 zum Bewegen einer Polanordnung 2, 3, 4. Dieser ist in der Ausgestaltung nach Figur 1 als elektrischer Drehantrieb bzw. Drehmotor realisiert, der im Drehpunkt P angeordnet ist und die Rotorkörper 11, 12 (Permanentmagnete 11 und Blechpakete 12) bewegen kann.

Der Stellmechanismus 5 ist in Figur 1 grob zusammengefasst derart ausgebildet, dass der Abstand X1, X2 zwischen der äußeren Mantelfläche AM des Rotors 1 und dem Flächenschwerpunkt W jeder Polanordnung 2, 3, 4 einstellbar ist, wodurch die Polanordnungen 2, 3, 4 nach innen zur Drehachse D des Rotors 1 hin oder nach außen von der Drehachse D des Rotors 1 weg bewegbar sind.

Genauer geschildert handelt es sich bei dem Flächenschwerpunkt W einer Polanordnung 2, 3, 4 um den Flächenschwerpunkt einer Einheit, die von einem magnetischem Rotorkörper 11 und einem magnetisierbaren Rotorkörper 12 gebildet wird.

Ferner sind in Figur 1 die Polanordnungen 2, 3, 4 derart positioniert bzw. bewegt, dass deren Flächenschwerpunkte W bzw. die Flächenschwerpunkte W der Rotorkörper 11, 12 am nächsten zur äußeren Mantelfläche AM positioniert ist.

Anders ausgedrückt, ist der Abstand X1 zwischen der äußeren Mantelfläche AM des Rotors 1 und dem jeweiligen Flächenschwerpunkt W der jeweiligen Polanordnung 2, 3, 4 in dem nach Figur 1 dargestellten ersten Zustand am geringsten bzw. am kleinsten.

Figur 2 zeigt eine Schnittansicht auf einen erfindungsgemäßen Rotor 1 in einem zweiten Zustand.

Wie bei Vergleich der Figuren 1 und 2 leicht zu erkennen ist, sind diese im Wesentlichen identisch. Daher wird zur Vermeidung unnötiger Wiederholungen auf die Ausführungen zu Figur 1 verwiesen, die hier analog auf Figur 2 anwendbar sind.

Nachstehend wird lediglich auf die Unterschiede zwischen den Figuren 1 und 2 eingegangen.

Zunächst ist bei Vergleich der Figuren 1 und 2 festzuhalten, dass in Figur 1 der Abstand X1 zwischen der äußeren Mantelfläche AM des Rotors 1 und dem Flächenschwerpunkt W jeder Polanordnung 2, 3, 4 bzw. deren Rotorkörpern 11, 12 eingestellt ist.

Dazu wurden die Polanordnungen 2, 3, 4 mithilfe der Stellmechanismen 5 bzw. deren Aktoren 6 nach außen von der Drehachse D des Rotors 1 weg bewegt.

In Figur 2 hingegen ist der Abstand X2 zwischen der äußeren Mantelfläche AM des Rotors 1 und dem Flächenschwerpunkt W jeder Polanordnung 2, 3, 4 bzw. deren Rotorkörpern 11, 12 eingestellt.

Bei direktem Vergleich der beiden Figuren ist gut zu erkennen, dass der Abstand X2 aus Figur 2 größer ist als der Abstand X1 aus Figur 1.

Demensprechend hat der Stellmechanismus 5 den Abstand X2 zwischen der äußeren Mantelfläche AM des Rotors 1 und dem Flächenschwerpunkt W jeder Polanordnung 2, 3, 4 derart eingestellt, dass die Polanordnungen 2, 3, 4 nach innen zur Drehachse D des Rotors 1 hinbewegt wurden. Mit anderen Worten ausgedrückt, wurden die Polanordnungen 2, 3, 4 in radialer Richtung R nach innen zur Drehachse D hinbewegt.

Obwohl nicht in den Figuren 1 oder 2 dargestellt, wird darauf hingewiesen, dass es möglich ist, dass der Stellmechanismus 5 ein elastisches Element, insbesondere eine Feder oder ein Gummielement, umfassen kann, das einem Aktuator 6 des Stellmechanismus 5 entgegenwirkt. Dadurch können die Polanordnungen 2, 3, 4 entgegen der Wirkrichtung des Aktuators 6 rückgestellt werden.

Dabei sind vorzugsweise der Aktuator 6 und das elastische Element an gegenüberliegenden Seiten einer Polanordnung 2, 3, 4 angeordnet.

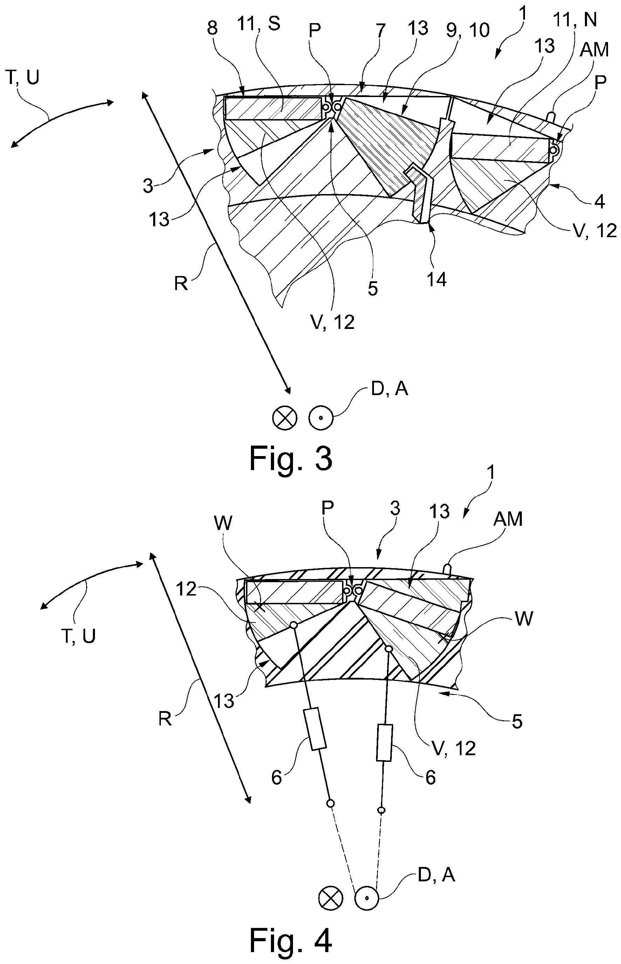

Figur 3 zeigt eine Schnittansicht auf einen erfindungsgemäßen Rotor 1 mit einem Ausführungsbeispiel eines Stellmechanismus 5 des Rotors 1.

Aufgrund der hohen Ähnlichkeit von Figur 3 zu den Figuren 1 und 2 wird zur Vermeidung unnötiger Wiederholungen auf die dortigen Ausführungen zu Figuren 1 und 2 verwiesen, welcher hier analog auf Figur 3 anwendbar sind.

Nachstehend wird lediglich auf die Unterschiede von Figur 3 zu den Figuren 1 und 2 eingegangen.

Wie Figur 3 zeigt, umfasst der Stellmechanismus 5 einen Drehpunkt P, um den die Polanordnung 3 schwenkbar ist.

Dabei weist der Stellmechanismus 5 eine Hebelanordnung 7 mit zwei Hebelarmen 8, 9 bzw. mit einem ersten Hebelarm 8 und einem zweiten Hebelarm 9 auf, mit deren Hilfe die Polanordnung 3 schwenkbar ist.

Der erste Hebelarm 8 verbindet den Drehpunkt P mit dem Rotorkörper 11, 12 der Polanordnung 3 bzw. mit dessen Schwerpunkt, wobei der zweite Hebelarm 9 den Drehpunkt P mit einer beschleunigbaren Hebelmasse 10 bzw. mit deren Schwerpunkt verbindet.

Die Länge der Hebelarme 8, 9, die Masse der Rotorkörper 11, 12 der Polanordnung 3 und die beschleunigbare Hebelmasse 10 sind derart aufeinander abgestimmt, dass bei Erreichen einer bestimmbaren Drehzahl des Rotors 1 die Hebelmasse 10 von der Drehachse D nach außen wegbewegt wird.

Dabei werden die Rotorkörper 11, 12 der Polanordnung 3 über den Drehpunkt P in die entgegengesetzte Richtung zur Hebelmasse 10 bewegt.

Ferner weist der Rotor 1 nach Figur 3 eine Arretierung 14 für die Polanordnung 3 auf, wobei die Arretierung 14 eine erste und eine zweite Stellposition hat.

Figur 3 zeigt die Arretierung 14 in der ersten Stellposition, in der die Polanordnung 3 bzw. deren Rotorkörper 11, 12 in einer ersten Entfernung von der Drehachse D arretiert wird.

Um nun ein Schwenken bzw. Drehen über den Drehpunkt P zu zulassen, wird die Arretierung 14 in die zweite Stellposition gebracht, in welcher die beschleunigbare Hebelmasse 10 gelöst wird bzw. in welcher die beschleunigbare Hebelmasse 10 frei beweglich ist. Dadurch schwenkt die Polanordnung 3 bzw. deren Rotorkörper 11, 12 derart um den Drehpunkt P (idealerweise entgegen dem Uhrzeigersinn), dass die Polanordnung 3 bzw. die Rotorkörper 11, 12 in einer zweiten Entfernung von der Drehachse D mittels der Hebelmasse 10 arretiert wird.

Figur 4 zeigt eine Schnittansicht auf einen erfindungsgemäßen Rotor 1 mit einem weiteren Ausführungsbeispiel eines Stellmechanismus 5 des Rotors 1.

Wegen der Ähnlichkeit von Figur 4 zu den Figuren 1 bis 3 wird zur Vermeidung unnötiger Wiederholungen auf die Ausführungen zu Figuren 1 bis 3 verwiesen, welche analog auf Figur 4 anwendbar sind.

Nachstehend wird auf die Unterschiede von Figur 4 zu den Figuren 1 bis 3 eingegangen.

So weist der Rotor 1 nach Figur 4 ebenfalls einen Stellmechanismus 5 auf, jedoch ist dieser mit einem hydraulisch oder pneumatisch betreibbaren Aktuator 6, insbesondere in Ausgestaltung eines Kolbens, realisiert.

Dabei ist der Stellmechanismus 5 zwischen der Drehachse D und der Polanordnung 3 angeordnet, die von der Drehachse D in radialer Richtung R beabstandet ist.

Alternativ ist es auch möglich, den Stellmechanismus 5 zwischen der äußeren Mantelfläche AM und der Polanordnung 3 anzuordnen, die dann idealerweise von der äußeren Mantelfläche AM in radialer Richtung R beabstandet ist.

Eine gesonderte Arretierung 14, wie in Figur 3 dargestellt, ist bei der Verwendung eines hydraulisch oder pneumatisch betreibbaren Aktuators 6 nicht notwendig, da dieser diese Funktion selbst übernehmen kann.

Dementsprechend ist mithilfe eines hydraulisch oder pneumatisch betreibbaren Aktuators 6 nicht nur eine erste und eine zweite Stellposition realisierbar, sondern diverse Stellpositionen mit diversen Entfernungen von der Drehachse D für die Polanordnung 3.

Unter der Entfernung der Polanordnung 3 bzw. deren Rotorkörper 11, 12 von der Drehachse D ist der Abstand zwischen dem Schwerpunkt oder Flächenschwerpunkt W und der Drehachse D zu verstehen.

Alternativ zu dem Aktuator 6 nach Figur 4 ist es möglich, dass der Stellmechanismus 5 eine Stelleinrichtung (nicht dargestellt) umfasst, die eine in axialer Richtung A einwirkende mechanische Kraft in eine Kraft mit radialer Richtung R umsetzt.

Diese ist dann z. B in der Lage mithilfe einer Kraftübertragungseinrichtung, z. B. ausgestaltet als Ausrücklager, die Polanordnung 3 zu bewegen.

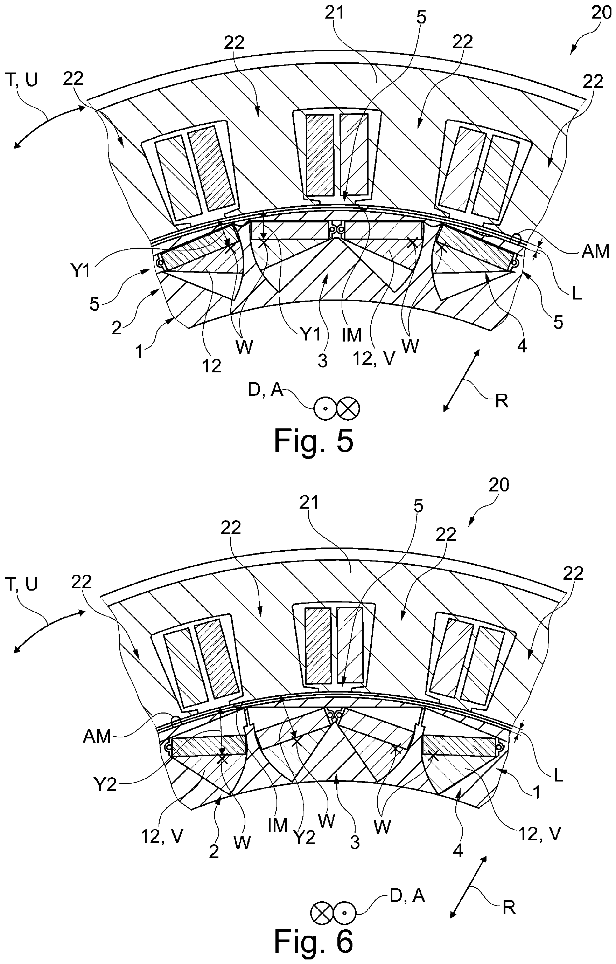

Figur 5 zeigt eine Schnittansicht auf eine erfindungsgemäße elektrische Maschine 20 mit einem Rotor 1 und einem Stator 21 in einem ersten Zustand.

Die elektrische Maschine 20 weist einen Rotor 1 nach den Figuren 1 und 2 auf sowie einen Stator 21, der den Rotor 1 umgibt. Der Stator 21 hat eine innere Mantelfläche IM.

Der Rotor 1 und der Stator 21 sind gemäß Figur 5 zueinander in radialer Richtung R beabstandet, um einen Luftspalt L zwischen beiden zu bilden.

Die elektrische Maschine 20 umfasst ferner eine Drehachse D, um welche der Rotor 1 drehbar ist, wobei der Rotor 1 eine äußere Mantelfläche AM aufweist, die ihn begrenzt.

Der Rotor 1 umfasst die Polanordnungen 2, 3, 4 und einen Stellmechanismus 5 für jede Polanordnung 2, 3, 4.

Der Stellmechanismus 5 bzw. jeder Stellmechanismus 5 ist derart ausgebildet, dass der Abstand Y1, Y2 zwischen einem Flächenschwerpunkt W der Polanordnungen 2, 3, 4 und dem Stator 21 bzw. dessen innerer Mantelfläche IM einstellbar ist.

Dadurch sind die Polanordnungen 2, 3, 4 nach innen zur Drehachse D der elektrischen Maschine 20 hin oder nach außen von der Drehachse D der elektrischen Maschine 20 weg bewegbar.

In Figur 5 sind die Polanordnungen 2, 3, 4 derart positioniert bzw. bewegt, dass deren Flächenschwerpunkte W am nächsten zur äußeren Mantelfläche AM bzw. zum Stator 21 positioniert sind.

Anders ausgedrückt, ist der Abstand Y1 zwischen dem jeweiligen Flächenschwerpunkt W der jeweiligen Polanordnung 2, 3, 4 bzw. den Rotorkörpern 11, 12 und dem Stator 21 bzw. dessen innerer Mantelfläche IM in dem nach Figur 5 dargestellten ersten Zustand am geringsten bzw. am kleinsten.

Figur 6 zeigt eine Schnittansicht auf eine erfindungsgemäße elektrische Maschine 20 mit dem Rotor 1 und dem Stator 21 aus Figur 5 in einem zweiten Zustand.

Wie bei Vergleich der Figuren 5 und 6 leicht zu erkennen ist, sind diese im Wesentlichen identisch. Daher wird zur Vermeidung unnötiger Wiederholungen auf die Ausführungen zu Figur 5 verwiesen, die hier analog anwendbar sind.

Nachstehend wird lediglich auf die Unterschiede zwischen Figur 5 und Figur 6 eingegangen.

Zunächst ist bei Vergleich der Figuren 5 und 6 festzuhalten, dass in Figur 5 der Abstand Y1 zwischen der äußeren Mantelfläche AM des Rotors 1 und dem Flächenschwerpunkt W jeder Polanordnung 2, 3, 4 bzw. den Rotorkörpern 11, 12 eingestellt ist.

Dazu wurden die Polanordnungen 2, 3, 4 mithilfe der Stellmechanismen 5 nach außen von der Drehachse D des Rotors 1 weg bewegt.

In Figur 6 hingegen ist der Abstand Y2 zwischen dem jeweiligen Flächenschwerpunkt W der jeweiligen Polanordnung 2, 3, 4 und dem Stator 21 bzw. dessen innerer Mantelfläche IM eingestellt ist.

Bei direktem Vergleich der beiden Figuren ist zu erkennen, dass der Abstand Y2 aus Figur 6 größer ist als der Abstand Y1 aus Figur 5.

Demensprechend hat der Stellmechanismus 5 den Abstand Y2 zwischen dem jeweiligen Flächenschwerpunkt W der jeweiligen Polanordnung 2, 3, 4 bzw. deren bzw. den Rotorkörpern 11, 12 und dem Stator 21 bzw. dessen innerer Mantelfläche IM derart eingestellt, dass die Polanordnungen 2, 3, 4 nach innen zur Drehachse D des Rotors 1 hinbewegt wurden. Mit anderen Worten ausgedrückt, wurden die Polanordnungen 2, 3, 4 in radialer Richtung R nach innen zur Drehachse D hinbewegt.

Figuren 5 und 6 ist ferner zu entnehmen, dass der Stator 21 mehrere Statorpolanordnungen 22 zum Erzeugen eines magnetischen Feldes umfasst.

Hierbei umfasst die jede Statorpolanordnung 22 einen Statorzahn mit Wicklungen, die unterschiedlich bestromt werden können, sodass in einem Statorzahn unterschiedliche magnetische Pole oder sogar kein magnetischer Pol erzeugbar ist.

Selbstverständlich ist es auch möglich, dass ein Rotor 1, der ähnlich nach Figur 3 ausgebildet ist, jedoch statt der beschleunigbaren Masse 10 ebenfalls magnetische und magnetisierbare Rotorkörper 11, 12 umfasst, innerhalb des Stators 22 platziert wird.

In einem solchen Fall, weist dann also der Rotor 1 jeweils eine Arretierung 14 für die Polanordnung 2, 3, 4 auf, wobei die Arretierung 14 eine erste und eine zweite Stellposition umfasst.

Die Stellpositionen sind in der Lage, die Polanordnungen 2, 3, 4 in unterschiedlichen Entfernungen von der Drehachse D oder der inneren Mantelfläche IM des Stators 21 zu arretieren.

Um die Polanordnungen 2, 3, 4 in eine entsprechende Position bzw. Entfernung zu bringen, ist innerhalb eines bestimmbaren Zeitintervalls von den Statorpolanordnungen 22 ein elektro-magnetisches Gegenfeld zum elektro-magnetischen Feld der Polanordnungen 2, 3, 4 des Rotors 1 generierbar.

Dadurch können nach Lösen der arretierten Polanordnungen 2, 3, 4 in der ersten Stellposition diese entsprechend der von den elektro-magnetischen Feldern erzeugten Kräften verschoben werden und an der zweiten Stellposition arretiert werden.

### Bezugszeichenliste

- 1: Rotor
- 2: Polanordnung
- 3: Polanordnung
- 4: Polanordnung
- 5: Stellmechanismus
- 6: Aktuator
- 7: Hebelanordnung
- 8: erster Hebelarm
- 9: zweiter Hebelarm
- 10: beschleunigbare Hebelmasse
- 11: Rotorkörper, Permanentmagnet
- 12: Rotorkörper, Blechpaket
- 13: Aussparung
- 14: Arretierung
- 20: Elektrische Maschine
- 21: Stator
- 22: Statorpolanordnung
- A: axiale Richtung
- AM: äußere Mantelfläche
- D: Drehachse
- IM: innere Mantelfläche
- L: Luftspalt
- N: erster / magnetischer Pol
- P: Drehpunkt
- R: radiale Richtung
- S: erster / magnetischer Pol
- T: tangentiale Richtung
- U: Umfangsrichtung
- V: zweiter / magnetisierbarer Pol
- W: Flächenschwerpunkt
- X: Abstand zwischen der äußeren Mantelfläche und Flächenschwerpunkt
- Y: Abstand zwischen dem Flächenschwerpunkt einer Polanordnung und der inneren Mantelfläche des Stators

## Patentansprüche

1. Rotor (1) einer als Innenläufer ausgebildeten elektrischen Maschine (20), wobei der Rotor aufweist:
eine Drehachse (D), welche sich in axialer Richtung (A) erstreckt und um welche der Rotor (1) drehbar ist,
eine äußere Mantelfläche (AM), die den Rotor (1) begrenzt,
eine Polanordnung (2, 3, 4), und
einen Stellmechanismus (5) für die Polanordnung (2, 3, 4), der derart ausgebildet ist, dass der Abstand (X) zwischen der äußeren Mantelfläche (AM) des Rotors (1) und einem Flächenschwerpunkt (W) der Polanordnung (2, 3, 4) einstellbar ist, wodurch die Polanordnung (2, 3, 4) nach innen zu der Drehachse (D) des Rotors (1) hin oder nach außen von der Drehachse (D) des Rotors (1) weg bewegbar ist,
**dadurch gekennzeichnet, dass**
der Stellmechanismus (5) eine Kraftübertragungseinrichtung und eine über eine von der Kraftübertragungseinrichtung einwirkende Kraft aktivierbare Stelleinrichtung aufweist, die die Polanordnung (2, 3, 4) bewegt,
der Rotor (1) eine Arretierung (14) für die Polanordnung (2, 3, 4) aufweist, und
die Arretierung (14) aufweist:
eine erste Stellposition, in welcher die Arretierung (14) in die Polanordnung (2, 3, 4) eingreift und welche die Polanordnung (2, 3, 4) in einer ersten Entfernung von der Drehachse (D) arretiert; und
eine zweite Stellposition, in welcher die Polanordnung (2 ,3, 4) um einen Drehpunkt (P) schwenkbar ist und in welcher die Polanordnung (2, 3, 4) in einer zweiten Entfernung von der Drehachse (D) arretiert werden kann.

2. Rotor nach Anspruch 1, wobei der Stellmechanismus (5) einen hydraulischen, pneumatischen oder elektrischen Aktuator (6) zum Bewegen der Polanordnung (2, 3, 4) aufweist.

3. Rotor nach Anspruch 1 oder 2, wobei
der Stellmechanismus (5) mit der Polanordnung (2, 3, 4) wirkverbunden ist,
der Stellmechanismus (5) zwischen der Drehachse (D) und der Polanordnung (2, 3, 4) angeordnet ist, und
der Stellmechanismus (5) zwischen der äußeren Mantelfläche (AM) und der Polanordnung (2, 3, 4) angeordnet ist.

4. Rotor nach Anspruch 2, wobei
der Stellmechanismus (5) ein elastisches Elementaufweist, das dem Aktuator (6) des Stellmechanismus (5) entgegenwirkt, um die Polanordnung (2, 3, 4) entgegen der Wirkrichtung des Aktuators (6) rückzustellen, und
der Aktuator (6) und das elastische Element an gegenüberliegenden Seiten der Polanordnung (2, 3, 4) angeordnet sind.

5. Rotor nach einem der Ansprüche 1 bis 4, wobei
der Stellmechanismus (5) einen Drehpunkt (P) aufweist, um den die Polanordnung (2, 3, 4) schwenkbar ist,
der Stellmechanismus (5) eine Hebelanordnung (7) aufweist, mit deren Hilfe die Polanordnung (2, 3, 4) schwenkbar ist,
die Hebelanordnung (7) einen ersten Hebelarm (8) und einen zweiten Hebelarm (9) aufweist,
der erste Hebelarm (8) den Drehpunkt (P) mit einem Rotorkörper (11, 12) der Polanordnung (2, 3, 4) verbindet,
der zweite Hebelarm (9) den Drehpunkt (P) mit einer beschleunigbaren Hebelmasse (10) verbindet, und
eine Länge des ersten Hebelarms (8), eine Länge des zweiten Hebelarms (9), eine Masse des Rotorkörpers (11, 12) der Polanordnung (2, 3, 4) und die beschleunigbare Hebelmasse (10) derart aufeinander abgestimmt sind, dass bei Erreichen einer bestimmbaren Drehzahl des Rotors (1) die beschleunigbare Hebelmasse (10) von der Drehachse (D) nach außen weg oder zu der Drehachse (D) nach innen hin bewegt wird und der Rotorkörper (11, 12) der Polanordnung (2, 3, 4) über den Drehpunkt (P) in eine entgegengesetzte Richtung zu der beschleunigbaren Hebelmasse (10) bewegt wird.

6. Rotor nach einem der Ansprüche 1 bis 5, wobei
die Polanordnung (2, 3, 4) zwei magnetische oder magnetisierbare Rotorkörper (11, 12) aufweist, die eine V-förmige Anordnung oder eine Speichenanordnung bilden oder flach in den Rotor (1) eingebettet sind.

7. Rotor nach einem der Ansprüche 1 bis 6, wobei
der Rotor (1) eine Aussparung (13) pro Polanordnung (2, 3, 4) aufweist, innerhalb der Aussparung (13) der magnetische oder magnetisierbare Rotorkörper (11, 12) angeordnet ist, und
die Aussparung (13) innerhalb des Rotors (1) im Querschnitt als Kreissegment oder Rechteck ausgebildet ist, um der Polanordnung (2, 3, 4) Raum zur Bewegung zu geben.

## Claims

1. A rotor (1) of an electric machine (20) designed as an internal rotor, wherein the rotor has:
a rotational axis (D), which extends in an axial direction (A) and about which the rotor (1) is rotatable,
an outer lateral surface (AM) which delimits the rotor (1),
a pole arrangement (2, 3, 4), and
an adjusting mechanism (5) for the pole arrangement (2, 3, 4), which is designed such that the spacing (X) between the outer lateral surface (AM) of the rotor (1) and a centre of gravity (W) of the at least one pole arrangement (2, 3, 4) is adjustable, whereby the pole arrangement (2, 3, 4) is movable inwards towards the rotational axis (D) of the rotor (1) or outwards away from the rotational axis (D) of the rotor (1),
**characterised in that**
the adjusting mechanism (5) has a force transmission device and an adjusting device that is activatable by a force acting by the force transmission device and which moves the pole arrangement (2, 3, 4),
the rotor (1) has a lock (14) for the pole arrangement (2, 3, 4), and
the lock (14) has:
a first adjusting position in which the lock (14) engages in the pole arrangement (2, 3, 4) and which locks the pole arrangement (2, 3, 4) at a first distance from the rotational axis (D); and a second adjusting position in which the pole arrangement (2, 3, 4) is pivotable about a pivot point (P) and in which the pole arrangement (2, 3, 4) can be locked at a second distance from the rotational axis (D).

2. The rotor according to claim 1, wherein the adjusting mechanism (5) has a hydraulic, pneumatic or electrical actuator (6) for moving the pole arrangement (2, 3, 4).

3. The rotor according to claim 1 or 2, wherein
the adjusting mechanism (5) is operatively connected to the pole arrangement (2, 3, 4),
the adjusting mechanism (5) is arranged between the rotational axis (D) and the pole arrangement (2, 3, 4), and
the adjusting mechanism (5) is arranged between the outer lateral surface (AM) and the pole arrangement (2, 3, 4).

4. The rotor according to claim 2, wherein
the adjusting mechanism (5) has an elastic element that counteracts the actuator (6) of the adjusting mechanism (5) in order to reset the pole arrangement (2, 3, 4) against the direction of action of the actuator (6), and
the actuator (6) and the elastic element are arranged on opposite sides of the pole arrangement (2, 3, 4).

5. The rotor according to any one of claims 1 to 4, wherein
the adjusting mechanism (5) has a pivot point (P) about which the pole arrangement (2, 3, 4) is pivotable,
the adjusting mechanism (5) has a lever arrangement (7) with the aid of which the pole arrangement (2, 3, 4) is pivotable,
the lever arrangement (7) has a first lever arm (8) and a second lever arm (9),
the first lever arm (8) connects the pivot point (P) to a rotor body (11, 12) of the pole arrangement (2, 3, 4),
the second lever arm (9) connects the pivot point (P) to an acceleratable lever mass (10), and a length of the first lever arm (8), a length of the second lever arm (9), a mass of the rotor body (11, 12) of the pole arrangement (2, 3, 4) and the acceleratable lever mass (10) are coordinated with one another in such a way that when a determinable rotational speed of the rotor (1) is reached, the acceleratable lever mass (10) is moved outwards away from the rotational axis (D) or inwards towards the rotational axis (D) and the rotor body (11, 12) of the pole arrangement (2, 3, 4) is moved via the pivot point (P) in an opposite direction to the acceleratable lever mass (10).

6. The rotor according to any one of claims 1 to 5, wherein
the pole arrangement (2, 3, 4) has two magnetic or magnetisable rotor bodies (11, 12) that form a V-shaped arrangement or a spoke arrangement or are embedded flat in the rotor (1).

7. The rotor according to any one of claims 1 to 6, wherein
the rotor (1) has a recess (13) for each pole arrangement (2, 3, 4),
the magnetic or magnetisable rotor body (11, 12) is arranged within the recess (13), and
the recess (13) within the rotor (1) is designed in cross-section as a segment of a circle or rectangle in order to give the pole arrangement (2, 3, 4) space to move.

## Revendications

1. Rotor (1) d une machine électrique (20) réalisée sous la forme d'un rotor interne, le rotor comportant :
un axe de rotation (D) qui s étend dans la direction axiale (A) et autour duquel le rotor (1) peut tourner,
une surface de gainage externe (AM) qui délimite le rotor (1),
un agencement de pôles (2, 3, 4) et
un mécanisme de réglage (5) pour 1 agencement de pôles (2, 3, 4), qui est conçu de telle sorte que la distance (X) entre la surface de gainage externe (AM) du rotor (1) et un centre de gravité de surface (W) de 1 agencement de pôles (2, 3, 4) soit réglable, 1 agencement de pôles (2, 3, 4) pouvant être ainsi déplacé vers 1 intérieur en direction de 1 axe de rotation (D) du rotor (1) ou vers 1 extérieur en s éloignant de 1 axe de rotation (D) du rotor (1),
**caractérisé en ce que**
le mécanisme de réglage (5) comporte un dispositif de transmission de force et un dispositif de réglage qui peut être activé par une force agissant par le dispositif de transmission de force et qui déplace 1 agencement de pôles (2, 3, 4),
le rotor (1) présente un verrouillage (14) pour 1 agencement de pôles (2, 3, 4) et
le verrouillage (14) comprend :
une première position de réglage, dans laquelle le verrouillage (14) vient en prise dans 1 agencement de pôles (2, 3, 4) et qui verrouille 1 agencement de pôles (2, 3, 4) à une première distance de 1 axe de rotation (D) ; et
une seconde position de réglage, dans laquelle 1 agencement de pôles (2, 3, 4) peut pivoter autour d un point de pivot (P) et dans laquelle 1 agencement de pôles (2, 3, 4) peut être verrouillé à une seconde distance de 1 axe de rotation (D).

2. Rotor selon la revendication 1, dans lequel le mécanisme de réglage (5) comporte un actionneur hydraulique, pneumatique ou électrique (6) pour déplacer 1 agencement de pôles (2, 3, 4).

3. Rotor selon la revendication 1 ou 2, dans lequel
le mécanisme de réglage (5) est relié de manière fonctionnelle à 1 agencement de pôles (2, 3, 4),
le mécanisme de réglage (5) est disposé entre 1 axe de rotation (D) et 1 agencement de pôles (2, 3, 4) et
le mécanisme de réglage (5) est disposé entre la surface de gainage externe (AM) et
1 agencement de pôles (2, 3, 4).

4. Rotor selon la revendication 2, dans lequel
le mécanisme de réglage (5) comporte un élément élastique qui agit contre 1 actionneur (6) du mécanisme de réglage (5) pour repositionner 1 agencement de pôles (2, 3, 4) contre le sens d action de 1 actionneur (6) et
1 actionneur (6) et 1 élément élastique sont disposés sur des côtés opposés de 1 agencement de pôles (2, 3, 4).

5. Rotor selon 1 une quelconque des revendications 1 à 4, dans lequel
le mécanisme de réglage (5) comporte un point de pivot (P) autour duquel 1 agencement de pôles (2, 3, 4) peut pivoter,
le mécanisme de réglage (5) comporte un agencement de levier (7) qui permet de faire pivoter 1 agencement de pôles (2, 3, 4),
l'agencement de levier (7) comporte un premier bras de levier (8) et un second bras de levier (9),
le premier bras de levier (8) relie le point de pivot (P) à un corps de rotor (11, 12) de 1 agencement de pôles (2, 3, 4),
le second bras de levier (9) relie le point de pivot (P) à une masse de levier pouvant être accélérée (10) et
une longueur du premier bras de levier (8), une longueur du second bras de levier (9), une masse du corps de rotor (11, 12) de 1 agencement de pôles (2, 3, 4) et la masse de levier pouvant être accélérée (10) sont adaptées 1 une à 1 autre de telle sorte que, lorsque le rotor (1) atteint une vitesse de rotation déterminable, la masse de levier pouvant être accélérée (10) soit déplacée vers 1 extérieur en s éloignant de 1 axe de rotation (D) ou vers 1 intérieur en direction de 1 axe de rotation (D) et le corps de rotor (11, 12) de 1 agencement de pôles (2, 3, 4) soit déplacé via le point de pivot (P) dans une direction opposée à la masse de levier pouvant être accélérée (10).

6. Rotor selon 1 une quelconque des revendications 1 à 5, dans lequel
1 agencement de pôles (2, 3, 4) comporte deux corps de rotor magnétiques ou
magnétisables (11, 12) qui forment un agencement en forme de V ou un agencement à rayons ou sont noyés à plat dans le rotor (1).

7. Rotor selon 1 une quelconque des revendications 1 à 6, dans lequel
le rotor (1) comporte un évidement (13) par agencement de pôles (2, 3, 4),
le corps de rotor magnétique ou magnétisable (11, 12) est disposé à 1 intérieur de 1 évidement (13) et
1 évidement (13) à 1 intérieur du rotor (1) est conçu en section transversale comme un segment de cercle ou un rectangle afin de donner à 1 agencement de pôles (2, 3, 4) de 1 espace pour se déplacer.
